# EUROPÄISCHE PATENTSCHRIFT

(11) **EP 2 979 009 B1**
(45) Veröffentlichungstag und Bekanntmachung des Hinweises auf die Patenterteilung: **05.06.2019**
(21) Anmeldenummer: 14704141.2
(22) Anmeldetag: 12.02.2014
(51) Int. Cl.: F16H 61/04

(54) **VERFAHREN ZUM SCHALTEN EINES GETRIEBES**
METHOD FOR SHIFTING A TRANSMISSION
PROCÉDÉ PERMETTANT DE COMMANDER UNE BOÎTE DE VITESSES

(30) Priorität: 25.03.2013 DE 102013205177
(43) Veröffentlichungstag der Anmeldung: 03.02.2016
(73) Patentinhaber: Bayerische Motoren Werke Aktiengesellschaft, 80809 München (DE)
(72) Erfinder: KLUGE, Benjamin, 81827 München (DE); MÜLLER, Fabian, 81541 München (DE)
(86) Internationale Anmeldenummer: PCT/EP2014/052705
(87) Internationale Veröffentlichungsnummer: WO 2014/154391

(56) Entgegenhaltungen:
- EP-A2- 1 624 231
- DE-A1- 10 304 050
- DE-A1-102009 000 253
- DE-A1-102009 028 305

## Beschreibung

Die vorliegende Erfindung betrifft ein Verfahren zum Schalten eines Getriebes gemäß den Merkmalen des Patentanspruches 1.

Aus der DE 103 04 050 A1 ist ein gattungsgemäßes Verfahren zum Schalten eines Stufenautomatikgetriebes bekannt. Das Getriebe weist ein Schaltelement auf, das durch ein reibschlüssiges oder ein parallel geschaltetes formschlüssiges Schaltelement gebildet ist. Beim Zuschalten des Schaltelements wird zuerst eine Übertragungsfähigkeit des reibschlüssigen Schaltelements eingestellt und bei Vorliegen eines synchronen Zustandes wird das formschlüssige Schaltelement geschlossen.

Zum technischen Hintergrund der Erfindung zählen die DE 10 2009 028 305 A1, DE 10 2009 000 253 A1 sowie die EP 1 624 231 A2.

In herkömmlichen Automatikgetrieben werden ... (weiter mit Seite 1, Absatz der ursprünglichen Beschreibung). Ausgangspunkt der Erfindung ist ein Getriebe, insbesondere ein Planetenradautomatikgetriebe, das mehrere nichtformschlüssige Schaltelemente und mindestens ein formschlüssiges Schaltelement aufweist. Bei den nichtformschlüssigen Schaltelementen

Bei den nichtformschlüssigen Schaltelementen kann es sich z. B. um Reibschaltelemente, insbesondere um Reibkupplungen oder Reibbremsen, wie z. B. Lamellenkupplungen oder Lamellenbremsen, handeln. Bei dem mindestens einen formschlüssigen Schaltelement kann es sich z. B. um eine Schaltklaue handeln.

Eine Analyse verschiedener Planetenradautomatikgetriebetopologien hat ergeben, dass sich bei manchen Getrieben ein- und dieselbe Übersetzung (im Folgenden "identische Übersetzung" genannt) zwischen dem Getriebeeingang und dem Getriebeausgang durch unterschiedliche "Schaltzustände" der einzelnen Schaltelemente eines Getriebes darstellen lässt. Ein "Getriebeschaltzustand" ist dabei durch die momentanen Schaltzustände der einzelnen Schaltelemente des Getriebes bestimmt. Jeder der einzelnen Getriebeschaltzustände weist eine ganz bestimmte Übersetzung zwischen einem Getriebeeingang und einem Getriebeausgang auf.

Bei einem erfindungsgemäßen Getriebe gibt es nun mindestens zwei Getriebeschaltzustände, die eine "identische Übersetzung" aufweisen. Denkbar ist beispielsweise, dass der sogenannte "Direktgang", der sich dadurch auszeichnet, dass die Drehzahl des Getriebeausgangs gleich der Drehzahl des Getriebeeingangs ist, durch zwei oder mehr unterschiedliche Getriebeschaltzustände dargestellt werden kann.

Der Begriff "identische Übersetzung" ist in der vorliegenden Beschreibung und in den Patentansprüchen nicht unbedingt wörtlich auszulegen, sondern umfasst neben mathematisch exakt identischen Übersetzungen auch Übersetzungen, die "annähernd" gleich sind, insbesondere Übersetzungen, die sich um weniger als 10%, vorzugsweise um weniger als 5% und besonderes bevorzugt um weniger als 2% voneinander unterscheiden.

Es kann nun vorgesehen sein, dass zum Schalten in einen ersten der mindestens zwei Getriebeschaltzustände mit "identischer Übersetzung" ausschließlich nichtformschlüssige Schaltelemente zu schließen sind. Der Plural "nichtformschlüssige Schaltelemente" ist in diesem Zusammenhang jedoch nicht streng grammatikalisch zu verstehen. Gemeint ist, dass zum Schalten in einen ersten der mindestens zwei Getriebeschaltzustände mit "identischer Übersetzung" entweder ausschließlich ein einziges nichtformschlüssiges Schaltelement oder ausschließlich mehrere nichtformschlüssige Schaltelemente zu schließen sind (aber kein formschlüssiges Schaltelement).

Zum Schalten in einen zweiten der mindestens zwei Getriebeschaltzustände mit identischer Übersetzung ist jedoch mindestens ein formschlüssiges Schaltelement zu schließen.

Der Kern der Erfindung besteht nun darin, dass zumindest bei manchen Schaltvorgängen, bei denen von einem momentanen Getriebeschaltzustand, dessen Übersetzung sich von der oben genannten "identischen Übersetzung" unterscheidet, auf die "identische Übersetzung" umgeschaltet werden soll, zunächst
a) in den ersten Getriebeschaltzustand und anschließend
b) in den zweiten Getriebeschaltzustand geschaltet wird,
wobei darauf hinzuweisen ist, dass der Übergang in den o.g. Schaltzustand b) nicht zwingend eine Differenzdrehzahl von Null an der Klaue voraussetzt. Die Klaue kann auch schon bei einer gewissen, nicht allzu großen Differenzdrehzahl (schaltbarer Einlegedifferenzdrehzahlbereich) eingelegt werden.

Ein ganz wesentlicher Vorteil der Erfindung ist darin zu sehen, dass trotz der Verwendung eines formschlüssigen Schaltelements Schaltungen unter Last (so genannte "Lastschaltungen") möglich sind.

Zumindest bei manchen Schaltvorgängen, bei denen ein direktes Schalten in den zweiten der mindestens zwei Getriebeschaltzustände (wegen des zu schließenden formschlüssigen Schaltelements) unter Last nicht möglich wäre, wird also zunächst in den ersten der mindestens zwei Getriebeschaltzustände geschaltet.

Anschließend wird von dem ersten Getriebeschaltzustand, der dieselbe Übersetzung aufweist, wie der zweite der mindestens zwei Getriebeschaltzustände, in den zweiten Getriebeschaltzustand geschaltet.

Würde man direkt von einem momentanen Getriebeschaltzustand, dessen Übersetzung sich von der "identischen Übersetzung" unterscheidet, in den zweiten Getriebeschaltzustand schalten, so könnte es zumindest bei manchen Schaltvorgängen des Getriebes zu einem Ratschen des zu schließenden formschlüssigen Schaltelements und/oder zu einem Einbruch der Zugkraft kommen (aufgrund einer nicht realisierbaren Lastschaltung (offene Schaltung)).

Aus diesem Grund kann es sinnvoll sein, in der Schaltstrategie "einen Umweg" über den ersten der mindestens zwei Getriebeschaltzustände mit identischer Übersetzung vorzusehen.

Wenngleich die mindestens zwei Getriebeschaltzustände dieselbe Übersetzung haben, ist es sinnvoll, nach dem Schalten in den ersten der mindestens zwei Getriebeschaltzustände weiter in den zweiten der mindestens zwei Getriebeschaltzustände zu schalten, da nach dem Einlegen des betreffenden formschlüssigen Schaltelements hierfür keinerlei oder nur eine geringe Leistung bzw. Energie zum Geschlossenhalten mehr erforderlich ist. Ein Übergang auf den zweiten der mindestens Getriebeschalzustände mit identischer Übersetzung ist insbesondere dann sinnvoll, wenn das Getriebe anschließend weiter in Getriebeschaltzustände geschaltet wird, in denen ein Schließen bzw. ein Geschlossen halten des mindestens einen formschlüssigen Schaltelements ohnehin erforderlich ist.

Nach einer Weiterbildung der Erfindung wird die oben beschriebene Schaltstrategie bei einer "Zughochschaltung", bei der im Zugbetrieb des Fahrzeugs von einem momentanen Getriebeschaltzustand, dessen Übersetzung sich von der identischen Übersetzung unterscheidet, auf die identische Übersetzung umgeschaltet werden soll, zunächst in den ersten Getriebeschaltzustand geschaltet und anschließend in den zweiten Getriebeschaltzustand. Unter einer Zughochschaltung versteht man einen Schaltvorgang, bei dem sich der Antriebsmotor und somit auch das Getriebe des Fahrzeugs im Zugbetrieb befinden (d.h. das Fahrzeug antrieben) und von einem momentanen Vorwärtsgang in einen höheren Vorwärtsgang geschaltet werden soll. Eine Zughochschaltung liegt beispielsweise vor, wenn bei beschleunigendem Fahrzeug vom zweiten in den dritten Gang oder vom dritten in den vierten Gang oder vom vierten in den fünften Gang etc. geschaltet wird.

Gibt es zu der Zielübersetzung bzw. dem Zielgang zwei oder mehr unterschiedliche Getriebeschaltzustände, nämlich einen, der ausgehend von momentanen Getriebeschaltzustand ausschließlich durch Schließen nichtformschlüssiger Schaltelemente erreichbar ist und einen anderen, der durch Schließen mindestens eines formschlüssigen Schaltelements zu erreichen ist, so ist es sinnvoll, das oben beschriebene, erfindungsgemäße Verfahren anzuwenden, da hiermit auch bei einer Zughochschaltung, bei der letztendlich mindestens in formschlüssiges Schaltelement zu schließen ist, ein zugkraftunterbrechungsfreies Schalten möglich ist.

Nach einer Weiterbildung der Erfindung kann vorgesehen sein, dass bei der oben beschriebenen Zughochschaltung stets zunächst in den ersten Getriebeschaltzustand geschaltet wird und anschließend in dem zweiten Getriebeschaltzustand. Es muss aber nicht zwingend vorgesehen sein, dass bei jeder Zughochschaltung, wie sie oben beschrieben ist, stets das erfindungsgemäße Verfahren angewendet wird.

Wenngleich Zugrückschaltungen in die Klaue nicht über den "Alternativgang" erfolgen müssen, sondern auch bei jeder konventionellen Klaue ohne Zugkraftunterbrechung erfolgen können, kann das erfindungsgemäße Verfahren auch bei Zugrückschaltungen angewendet werden. Konkret kann vorgesehen sein, dass bei einer Zugrückschaltung, bei der im Zugbetrieb des Fahrzeugs von einem momentanen Getriebeschaltzustand, dessen Übersetzung sich von der "identischen Übersetzung" unterscheidet, auf die identische Übersetzung umgeschaltet werden soll, zunächst in den ersten Getriebeschaltzustand geschaltet wird (d. h. ausschließlich durch Schließen eines oder mehrerer nicht formschlüssiger Schaltelemente) und anschließend in den zweiten Getriebeschaltzustand geschaltet wird (durch Schließen mindestens eines formschlüssigen Schaltelements).

Es kann vorgesehen sein, dass bei jeder Zugrückschaltung, wie sie zuvor beschrieben worden ist, stets zunächst in den ersten Getriebeschaltzustand geschaltet wird und anschließend erst in den zweiten Getriebeschaltzustand. Dies muss aber nicht zwingend so sein.

Bei Schaltungen im Schubbetrieb, d. h. bei Schubhochschaltungen oder Schubrückschaltungen, bei denen im Schubbetrieb des Fahrzeugs von einem momentanen Getriebeschaltzustand, dessen Übersetzung sich von der "identischen" Übersetzung unterscheidet, auf die identische Übersetzung umgeschaltet werden soll, kann vorgesehen sein, direkt in den zweiten Getriebeschaltzustand zu schalten.

Im Folgenden wird die Erfindung im Zusammenhang mit der Zeichnung näher erläutert. Es zeigen:
- Figur 1: eine Getriebetopologie eines 9-Gang-Planetenradautomatikgetriebes; und
- Figur 2: eine Schaltmatrix des in Figur 1 gezeigten Planetenradautomatikgetriebes.

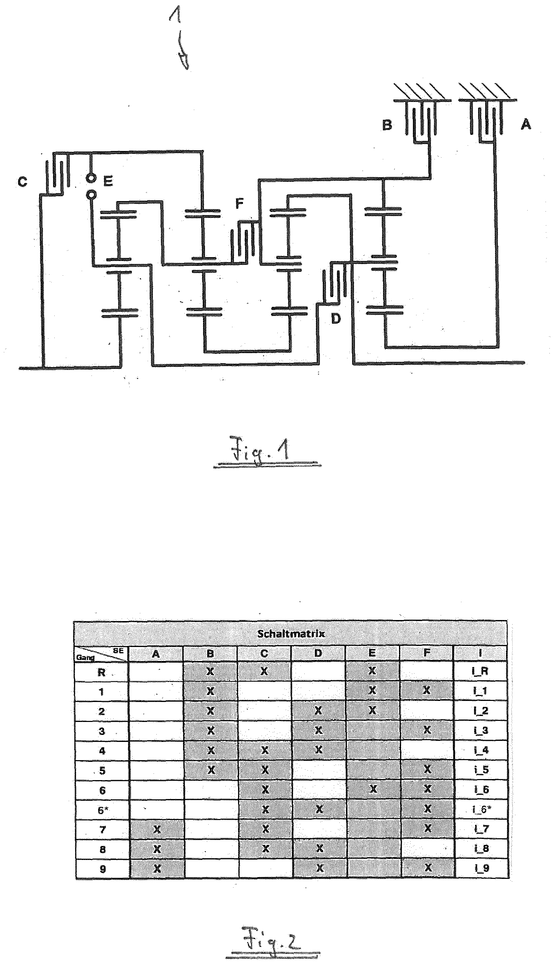

Figur 1 zeigt ein Neun-Gang-Planetenradautomatikgetriebe 1 mit sechs Schaltelementen A, B, C, D, E und F. Von den sechs Schaltelementen sind die Schaltelemente A, B, C, D, F als reibschlüssige Schaltelemente ausgeführt, wobei sich bei A und B um Lamellenbremsen und bei C, D, F um Lamellenkupplungen handelt. Das Schaltelement E ist als formschlüssiges Schaltelement ausgeführt. E kann beispielsweise durch eine Schaltklaue gebildet sein.

Auf die konkrete Ausgestaltung des Getriebes muss nicht im Einzelnen eingegangen werden.

Figur 2 zeigt eine Schaltmatrix des in Figur 1 skizzierten Getriebes. In der linken Spalte sind die einzelnen Getriebeschaltzustände angegeben, die das in Figur 1 gezeigte Getriebe einnehmen können .Die einzelnen Getriebeschaltzustände sind definiert durch bestimmte Schaltzustände der einzelnen Schaltelemente A - F. die mit "X" gekennzeichneten Tabellenfelder bedeuten, dass das betreffende Schaltelement geschlossen ist (Drehmomentübertragung über das betreffende Schaltelement möglich). Leere Tabellenfelder bedeuten, dass das betreffende Schaltelement geöffnet ist (Drehmomentübertragung über das betreffende Schaltelement nicht möglich). Betrachtet man beispielsweise den Getriebeschaltzustand 2, so ist ersichtlich, dass die Schaltelemente B, D und E geschlossen und die Schaltelemente A, C und F geöffnet sind.

Ferner ist ersichtlich, dass es zwei "sechste Getriebeschaltzustände" gibt, die mit den Ziffern 6 bzw. 6* gekennzeichnet sind. Die entsprechenden Übersetzungen sind mit i_{_6} bzw. i_{_6*} gekennzeichnet. Die Übersetzungen i_{_6} und. i_{_6*} sind identisch.

Schaltet man vom Getriebeschaltzustand 6 in den Getriebeschaltzustand 6*, oder umgekehrt, so ändert sich an der Gesamtübersetzung des Getriebes nichts. Lediglich die internen Schaltzustände der Schaltelemente unterscheiden sich in diesen beiden Getriebeschaltzuständen. Konkret sind im Getriebeschaltzustand 6 die Lamellenkupplungen C und F sowie die Schaltklaue E geschlossen, wohingegen im Getriebeschaltzustand 6*, der die identische Übersetzung wie der Getriebeschaltzustand 6 aufweist, die Lamellenkupplungen C, D und F geschlossen sind und die Schaltklaue E geöffnet ist.

Will man beispielsweise im Zugbetrieb des Fahrzeugs vom fünften Gang in den "sechsten Gang" schalten, so wird gemäß der Erfindung zunächst in den Getriebeschaltzustand 6* geschaltet, da hierfür ausschließlich nichtformschlüssige Schaltelemente zu betätigen bzw. zu schließen sind. Konkret muss beim Umschalten vom Getriebeschaltzustand 5 in den Getriebeschaltzustand 6* lediglich die Lamellenkupplung D geschlossen und die Lamellenkupplung B geöffnet werden.

Ist die gewünschte Zielübersetzung i_{_6*}, die identisch mit der Übersetzung i_{_6} ist, erreicht, so kann ohne Zugkrafteinbruch in den Schaltzustand 6 umgeschaltet werden, wobei lediglich die Lamellenkupplung D geöffnet und die Schaltklaue E geschlossen werden muss. Bei einem derartigen Schaltvorgang tritt an der Schaltklaue während des Schalten kein oder nur ein sehr geringes Drehmoment auf, was das Einlegen bzw. Schließen der Schaltklaue E problemlos möglich macht.

## Patentansprüche

1. Verfahren zum Schalten eines Getriebes (1), insbesondere eines Planetenradautomatikgetriebes, das mehrere nichtformschlüssige Schaltelemente (A, B, C, D, F) und mindestens ein formschlüssiges Schaltelement (E) aufweist, wobei
• das Getriebe (1) durch die momentanen Schaltzustände der Schaltelemente (A - F) bestimmte Getriebeschaltzustände (R, 1, 2, 3, 4, 5, 6, 6*, 7, 8, 9) einnehmen kann,
• jeder der Getriebeschaltzustände (R, 1, 2, 3, 4, 5, 6, 6*, 7, 8, 9) eine bestimmte Übersetzung zwischen einem Getriebeeingang und einem Getriebeausgang aufweist und
• mindestens zwei Getriebeschaltzustände (6, 6*) eine identische Übersetzung (i_{_6}, i_{_6*}) aufweisen, wobei
∘ die zum Schalten in einen ersten (6*) der mindestens zwei Getriebeschaltzustände (6, 6*) mit identischer Übersetzung (i_{_6}, i_{_6*}) zu schließenden Schaltelemente ausschließlich nichtformschlüssige Schaltelemente sind und
∘ zum Schalten in einen zweiten (6) der mindestens zwei Getriebeschaltzustände (6, 6*) mit identischer Übersetzung (i_{_6}, i_{_6*}) mindestens ein formschlüssiges Schaltelement (E) zu schließen ist, und wobei
• zumindest bei manchen Schaltvorgängen, bei denen von einem momentanen Getriebeschaltzustand, dessen Übersetzung sich von der identischen Übersetzung (i_{_6}, i_{_6*}) unterscheidet, auf die identische Übersetzung umgeschaltet werden soll, zunächst in den ersten Getriebeschaltzustand (6*) geschaltet wird und anschließend in den zweiten Getriebeschaltzustand (6) geschaltet wird, **dadurch gekennzeichnet, dass**
• zumindest bei manchen Schubhochschaltungen, bei denen im Schubbetrieb des Fahrzeugs von einem momentanen Getriebeschaltzustand, dessen Übersetzung sich von der identischen Übersetzung (i_{_6}, i_{_6*}) unterscheidet, auf die identische Übersetzung (i_{_6}, i_{_6*}) umgeschaltet werden soll, direkt in den zweiten Getriebeschaltzustand (6) geschaltet wird oder
• zumindest bei manchen Schubrückschaltungen, bei denen im Schubbetrieb des Fahrzeugs von einem momentanen Getriebeschaltzustand, dessen Übersetzung sich von der identischen Übersetzung (i_{_6}, i_{_6*}) unterscheidet, auf die identische Übersetzung (i_{_6}, i_{_6*}) umgeschaltet werden soll, direkt in den zweiten Getriebeschaltzustand (6) geschaltet wird.

2. Verfahren nach Anspruch 1, **dadurch gekennzeichnet, dass** bei einer Zughochschaltung, bei der im Zugbetrieb des Fahrzeugs von einem momentanen Getriebeschaltzustand, dessen Übersetzung sich von der identischen Übersetzung (i_{_6}, i_{_6*}) unterscheidet, auf die identische Übersetzung (i_{_6}, i_{_6*}) umgeschaltet werden soll, zunächst in den ersten Getriebeschaltzustand (6*) geschaltet wird und anschließend in den zweiten Getriebeschaltzustand (6) geschaltet wird.

3. Verfahren nach Anspruch 2, **dadurch gekennzeichnet, dass** bei einer Zughochschaltung nach Anspruch 2 stets zunächst in den ersten Getriebeschaltzustand (6*) geschaltet wird und anschließend in den zweiten Getriebeschaltzustand (6) geschaltet wird.

4. Verfahren nach einem der Ansprüche 1 bis 3, **dadurch gekennzeichnet, dass** bei einer Zugrückschaltung, bei der im Zugbetrieb des Fahrzeugs von einem momentanen Getriebeschaltzustand, dessen Übersetzung sich von der identischen Übersetzung (i_{_6}, i_{_6*}) unterscheidet, auf die identische Übersetzung (i_{_6}, i_{_6*}) umgeschaltet werden soll, zunächst in den ersten Getriebeschaltzustand (6*) geschaltet wird und anschließend in den zweiten Getriebeschaltzustand (6) geschaltet wird.

5. Verfahren nach Anspruch 4, **dadurch gekennzeichnet, dass** bei einer Zugrückschaltung nach Anspruch 4 stets zunächst in den ersten Getriebeschaltzustand (6*) geschaltet wird und anschließend in den zweiten Getriebeschaltzustand (6) geschaltet wird.

6. Verfahren nach einem der Ansprüche 1 bis 5, **dadurch gekennzeichnet, dass** mindestens eines der nichtformschlüssigen Schaltelemente (A, B, C, D, F) eine Reibbremse oder eine Reibkupplung, insbesondere eine Lamellenbremse oder eine Lamellenkupplung, ist.

7. Verfahren nach einem der Ansprüche 1 bis 6, **dadurch gekennzeichnet, dass** das mindestens eine formschlüssige Schaltelement (E) eine Schaltklaue ist.

## Claims

1. A method for changing gear in a transmission (1), traction an epicyclic automatic transmission, which has a plurality of non-positive gear-change elements (A, B, C, D, F) and at least one positive gear-change element (E), wherein
• the transmission (1) due to the current gear-change states of the gear-change elements (A - F) can assume certain transmission gear-change states (R, 1, 2, 3, 4, 5, 6, 6*, 7, 8, 9),
• each of the transmission gear-change states (R, 1, 2, 3, 4, 5, 6, 6*, 7, 8, 9) has a certain transmission ratio between a transmission input and a transmission output, and
• at least two transmission gear-change states (6, 6*) have an identical transmission ratio (i_{_6}, i_{_6*}), wherein
∘ the gear-change elements which are to be closed for changing into a first (6*) of the at least two transmission gear-change states (6, 6*) with an identical transmission ratio (i_{_6}, i_{_6*}) are exclusively non-positive gear-change elements, and
∘ for changing into a second (6) of the at least two transmission gear-change states (6, 6*) with an identical transmission ratio (i_{_6}, i_{_6*}), at least one positive gear-change element (E) is to be closed, and wherein
• at least in the case of some gear-change operations in which the gear is to be changed from a current gear-change state, the transmission ratio of which differs from the identical transmission ratio (i_{_6}, i_{_6*}), to the identical transmission ratio, first of all the gear is changed into the first transmission gear-change state (6*) and then the gear is changed into the second gear-change state (6), **characterised in that**
• at least in the case of some traction upshifts, in which in traction operation of the vehicle the gear is to be changed from a current transmission gear-change state, the transmission ratio of which differs from the identical transmission ratio (i_{_6}, i_{_6*}), to the identical transmission ratio (i_{_6}, i_{_6*}), the gear is changed directly into the second transmission gear-change state (6), or
• at least in the case of some traction downshifts, in which in traction operation of the vehicle the gear is to be changed from a current transmission gear-change state, the transmission ratio of which differs from the identical transmission ratio (i_{_6}, i_{_6*}), to the identical transmission ratio (i_{_6}, i_{_6*}), the gear is changed directly into the second transmission gear-change state (6).

2. A method according to Claim 1, **characterised in that** in the case of a power upshift, in which in power operation of the vehicle the gear is to be changed from a current transmission gear-change state, the transmission ratio of which differs from the identical transmission ratio (i_{_6}, i_{_6*}), to the identical transmission ratio (i_{_6}, i_{_6*}), first of all the gear is changed into the first transmission gear-change state (6*) and then the gear is changed into the second transmission gear-change state (6).

3. A method according to Claim 2, **characterised in that** in the case of a power upshift according to Claim 2 always first of all the gear is changed into the first transmission gear-change state (6*) and then the gear is changed into the second transmission gear-change state (6).

4. A method according to one of Claims 1 to 3, **characterised in that** in the case of a power downshift, in which in power operation of the vehicle the gear is to be changed from a current transmission gear-change state, the transmission ratio of which differs from the identical transmission ratio (i_{_6}, i_{_6*}), to the identical transmission ratio (i_{_6}, i_{_6*}), first of all the gear is changed into the first transmission gear-change state (6*) and then the gear is changed into the second transmission gear-change state (6).

5. A method according to Claim 4, **characterised in that** in the case of a power downshift according to Claim 4 always first of all the gear is changed into the first transmission gear-change state (6*) and then the gear is changed into the second transmission gear-change state (6).

6. A method according to one of Claims 1 to 5, **characterised in that** at least one of the non-positive gear-change elements (A, B, C, D, F) is a friction brake or a friction clutch, especially a multi-disc brake or a multi-disc clutch.

7. A method according to one of Claims 1 to 6, **characterised in that** the at least one positive gear-change element (E) is a shift dog.

## Revendications

1. Procédé permettant de commander une boîte de vitesses (1) en particulier une boîte de vitesses automatique à roue planétaire qui comporte plusieurs éléments de commutation (A, B, C, D, F) à engagement non positif et au moins un élément de commutation (E) à engagement positif, selon lequel
- la boîte de vitesses (1) peut prendre, du fait des états de commutation instantanés des éléments de commutation (A-F) des états de commutation déterminés (R, 1, 2, 3, 4, 5, 6, 6*, 7, 8, 9),
- chacun des états de commutation (R, 1, 2, 3, 4, 5, 6, 6*, 7, 8, 9) de la boîte de vitesses présente une démultiplication définie entre l'entrée de la boîte de vitesses et la sortie de la boîte de vitesses,
- au moins deux états de commutation de la boîte de vitesses (6, 6*) présentent une démultiplication identique (i_6, i_6*),
- les éléments de commutation devant être fermés pour effectuer un passage dans un premier état de commutation (6*) parmi les deux états de commutation (6, 6*) de la boîte de vitesses ayant une démultiplication identique (i_6, i_6*), sont exclusivement des éléments de commutation à engagement non positif, et
- pour effectuer un passage dans le second état de commutation (6) parmi les deux états de commutation (6, 6*) de la boîte de vitesses ayant une démultiplication identique (i_6, i_6*), au moins un élément de commutation à engagement positif (E) doit être fermé, et
au moins dans certains processus pour lesquels on doit effectuer un passage d'un état de commutation instantané de la boîte de vitesses dont la multiplication se distingue de la démultiplication identique (i_6, i_6*), à la démultiplication identique, on effectue tout d'abord un passage dans le premier état de commutation (6*) de la boîte de vitesses, puis on effectue un passage dans le second état de commutation (6) de la boîte de vitesses, **caractérisé en ce que**
- au moins dans certains processus de passage à la vitesse supérieure à bas régime pour lesquels en fonctionnement en décélération du véhicule on doit effectuer un passage d'un état de commutation instantané de la boîte de vitesses dont la démultiplication se distingue de la démultiplication identique (i_6, i_6*) à la démultiplication identique (i_6, i_6*), on effectue directement un passage dans le second état de commutation (6) de la boîte de vitesses, ou
- au moins dans certains processus de passage à la vitesse inférieure à bas régime pour lesquels, en fonctionnement en décélération du véhicule on doit effectuer un passage d'un état de commutation instantané de la boîte de vitesses dont la démultiplication se distingue de la démultiplication identique (i_6, i_6*), à la démultiplication identique (i_6, i_6*), on effectue directement un passage dans le second état de commutation (6) de la boîte de vitesses.

2. Procédé conforme à la revendication 1,
**caractérisé en ce que**
dans le cas d'un passage à la vitesse supérieure à haut régime, pour lequel en fonctionnement de traction du véhicule on doit passer d'un état de commutation de la boîte de vitesses instantané dont la démultiplication diffère de la démultiplication identique (i_6, i_6*), à la démultiplication identique (i_6, i_6*), on effectue tout d'abord un passage dans le premier état de commutation (6*) de la boîte de vitesses puis on effectue un passage dans le second état de commutation (6) de la boîte de vitesses.

3. Procédé conforme à la revendication 2,
**caractérisé en ce que**
dans le cas d'un passage à la vitesse supérieure à haut régime selon la revendication 2, on effectue toujours tout d'abord un passage dans le premier état de commutation (6*) de la boîte de vitesses puis on effectue un passage dans le second état (6) de la boîte de vitesses.

4. Procédé conforme à l'une des revendications 1 à 3,
**caractérisé en ce que**
dans le cas d'un passage à la vitesse inférieure à haut régime, pour lequel, en fonctionnement de traction du véhicule on doit effectuer un passage d'un état de commutation instantané de la boîte de vitesses dont la multiplication diffère de la démultiplication identique (i_6, i_6*), à la démultiplication identique (i_6, i_6*), on effectue tout d'abord un passage dans le premier état de commutation (6*) de la boîte de vitesses, puis on effectue un passage dans le second état de commutation (6) de la boîte de vitesses.

5. Procédé conforme à la revendication 4,
**caractérisé en ce que**
dans le cas d'un passage à la vitesse inférieure à haut régime selon la revendication 4, on effectue toujours tout d'abord un passage dans le premier état de commutation (6*) de la boîte de vitesses puis on effectue un passage dans le second état de commutation (6) de la boîte de vitesses.

6. Procédé conforme à l'une des revendications 1 à 5,
**caractérisé en ce qu'**
au moins l'un des éléments de commutation (A, B, C, D, F) à engagement non positif est un frein de friction ou un embrayage à friction, en particulier un frein à disques ou un embrayage à disques.

7. Procédé conforme à l'une des revendications 1 à 6,
**caractérisé en ce que**
l'élément de commutation (E) à engagement positif est un crabot.
